# EUROPÄISCHE PATENTANMELDUNG

(11) **EP 2 905 059 A1**
(43) Veröffentlichungstag der Anmeldung: **12.08.2015**
(21) Anmeldenummer: 14199147.1
(22) Anmeldetag: 19.12.2014
(51) Int. Cl.: B01D 46/00

(54) **Vorrichtung zur Reinigung eines Rauchgas/Brenngas-Gemischs**

(30) Priorität: 05.02.2014 DE 102014101385
(71) Anmelder: Ettenberger GmbH & Co. KG, 36039 Fulda (DE)
(72) Erfinder: Sopp, Armin, 36137 Großenlüder (DE); Ronneburg, Claus, 36093 Künzell (DE)
(74) Vertreter: advotec.

(57) **Zusammenfassung**

Die Erfindung betrifft ein Verfahren zur Reinigung eines heißen Rauchgas/Brenngas-Gemischs sowie eine zugehörige Vorrichtung (01). Hierzu wird das Rauchgas/Brenngas-Gemisch in ein Filtergehäuse (02) der Vorrichtung (01) eingeleitet und durchströmt ein darin angeordnetes Filterelement (05) einer Filtereinrichtung und wird über eine sich anschließende Gasleitung (06) der Filtereinrichtung abgeleitet. Um eine Reinigung der Filterelemente (05) zu ermöglichen, werden zwei wechselnd betreibbare Filtereinrichtungen eingesetzt, welche jeweils ein Absperrventil (07) zur Regelung von deren Durchströmung aufweisen. Eine verbesserte Reinigungswirkung bei geringeren Herstellungs- und Betriebskosten wird erzielt durch ein Verfahren, bei dem brennbare Rückstände an dem zu reinigenden Filterelement (05a) mittels eines rückströmenden Sauerstoffgemischs verbrannt und durch das Filterelement (05b) der jeweils anderen Filtereinrichtung abgeleitet werden.

## Beschreibung

Die Erfindung betrifft eine Vorrichtung zur Reinigung eines heißen Rauchgas/Brenngas-Gemischs mittels eines in einem Filtergehäuse angeordneten Filterelements gemäß dem Oberbegriff des Anspruchs 1.

Aus dem Stand der Technik sind verschiedene Ausführungsformen von Vorrichtungen zur Filterung von Rauchgas/Brenngas-Gemischen bekannt, wobei hier in aller Regel eine Filtration mittels Filterelementen eingesetzt wird. Hierbei weisen die bekannten Ausführungsformen ein in der Regel zylindrisches Filtergehäuse auf, in dem eine Mehrzahl von Filterelementen hängend eingesetzt wird. Das in das Filtergehäuse einströmende Rauchgas/Brenngas-Gemisch wird durch die Filterelemente geleitet und durch eine an den Filterelementen angeschlossene Gasleitung abgeführt. Eine hierzu beispielhafte Ausführungsform offenbart die Schrift DE 10 2006 028 293 A1.

Beim Betrieb derartiger Vorrichtungen ist es erforderlich, dass die Filterelemente selbst in regelmäßigen Abständen von den Anhaftungen befreit werden. Daher werden, um einen reibungslosen Betrieb von zugehörigen Anlagenkomponenten sicherzustellen, zumindest zwei derartige Vorrichtungen unabhängig voneinander bereitgehalten. Hierbei befindet sich eine Vorrichtung in Verwendung, während die andere Vorrichtung selbst gereinigt wird oder sich in einer Bereitschaftsstellung für den Fall erforderlicher Reinigung der anderen, in Betrieb befindlichen Vorrichtung befindet.

Zur Reinigung der Filterelemente wird im Stand der Technik in üblicher Weise ein Stickstoff unter Druck entgegen der gewöhnlichen Filtrationsrichtung in die Filterelemente eingeblasen, welcher zu einem Austrag von Partikeln aus den Filterelementen führt. Diese fallen im Filtergehäuse herab, wobei die sich im trichterförmigen unteren Ende sammelnden Rückstände sodann aus dem Filtergehäuse ausgeschleust werden können.

Nachteilig bei bekannten Ausführungsformen aus dem Stand der Technik ist es, dass beim Umschalten von einer in Verwendung befindlichen Vorrichtung auf die andere Vorrichtung unvermittelt das heiße Rauchgas/Brenngas-Gemisch auf die kalten Filterelemente trifft. Diese anfängliche Temperaturdifferenz führt zum einen zu einer geringeren Filterleistung, und es entsteht eine höhere Schadensanfälligkeit insbesondere hinsichtlich einer Rissbildung.

Ebenso stellt sich die bisher verwendete Methode zur Reinigung der Filterelemente durch Verwendung von Druckstößen als nicht zufriedenstellend dar. Zum einen bedarf es der Verbesserung der Reinigungswirkung, und zum anderen treten mitunter Filterbrüche aufgrund der hohen Belastung durch das Eigengewicht der Filterelemente, das Gewicht der anhaftenden Rückstände und zudem durch die Druckbelastung bei der Reinigung durch das Einblasen entgegen der Strömungsrichtung des zu filternden Rauchgas/Brenngas-Gemisches auf.

Aufgabe der vorliegenden Erfindung ist es daher, die Bereitschaft entsprechender Vorrichtungen ohne unnötigen Energieaufwand zu verbessern und zudem hier die Reinigung der Filterelemente selbst zu verbessern.

Die gestellte Aufgabe wird durch eine erfindungsgemäße Ausführungsform nach der Lehre des Anspruchs 1 gelöst. Ein erfindungsgemäßes Verfahren zur Filterung eines Rauchgas/Brenngas-Gemisches und zugleich zu einer Reinigung einer entsprechenden Vorrichtung ist im Anspruch 10 angegeben.

Vorteilhafte Ausführungsformen sind Gegenstand der Unteransprüche.

Eine gattungsgemäße Vorrichtung zur Reinigung eines heißen Rauchgas/Brenngas-Gemischs weist zunächst einmal ein Filtergehäuse mit zumindest einem darin angeordneten Filterelement auf. Dieses Filterelement ist Teil einer Filtereinrichtung, welche weiterhin eine sich am Filterelement anschließende Gasleitung zur Ableitung des gereinigten Rauchgas/Brenngas-Gemischs und ein in der Gasleitung angeordnetes Absperrventil umfasst.

Weiterhin bestehen die bekannten Vorrichtungen aus zumindest zwei Filtereinrichtungen, welche wechselnd betrieben werden können. Hierzu kann durch gegenläufiges Öffnen und Schließen der entsprechenden Absperrventile die Durchströmung der Filtereinrichtungen bzw. der Filterelemente wechselnd gesteuert werden.

Im Gegensatz zu bekannten Ausführungsformen von wechselnd betreibbaren Filtereinrichtungen werden diese erfindungsgemäß in einem gemeinsamen Filtergehäuse angeordnet. In diesem Falle befinden sich die Filterelemente von zumindest zwei Filtereinrichtungen in dem gemeinsamen Filtergehäuse. Entscheidend hierbei ist, dass sowohl die in Betrieb vom Rauchgas/Brenngas-Gemisch durchströmten Filterelemente als auch die - aufgrund der Selbstreinigung oder Bereitschaftsstellung-nicht vom Rauchgas/Brenngas-Gemisch durchströmten Filterelemente vom heißen Rauchgas/Brenngas-Gemisch umgeben sind.

Hinsichtlich der Anordnung der Filterelemente von zumindest zwei Filtereinrichtungen in einem Filtergehäuse kommt es somit wesentlich darauf an, dass ebenso die nicht durchströmten Filterelemente vom heißen Rauchgas/Brenngas-Gemisch, welches durch die jeweils andere Filtereinrichtung filtriert wird, auf der Betriebstemperatur gehalten werden. Hierbei sind beispielsweise trennende Einbauten im Filtergehäuse (welche beispielsweise einzelne Abteile je Filterelement bilden) unschädlich, sofern eine entsprechende Temperierung auch des jeweils nicht durchströmten Filterelements durch das Rauchgas/BrenngasGemisch gewährleistet wird. Derartige Unterteilungen können vorgesehen sein, um die Stabilität des Filtergehäuses zu verbessern, oder um beispielsweise für den unwahrscheinlichen Fall eines Filterbruchs ein vollständiges Absperren entsprechender Filterelemente durch beispielsweise automatisch schließende Klappen bewirken zu können.

Durch diese neu geschaffene Ausführungsform wird einerseits der Aufbau der Vorrichtungen trotz wechselnden Betriebs der Filtereinrichtungen erheblich vereinfacht. Andererseits werden nunmehr auch die Filterelemente der sich in Ruhestellung befindenden Filtereinrichtung vom Rauchgas/Brenngas-Gemisch temperiert. Somit wird durch die erfindungsgemäße Ausführungsform zum einen eine erhebliche Vereinfachung der Vorrichtung und zum anderen bei hoher Verfügbarkeit eine verbesserte Filterleistung erzielt.

Es ist grundsätzlich auch möglich, zwei Filtergehäuse einzusetzen, wobei jedoch die beiden Filtergehäuse durch eine Rauchgasführung miteinander verbunden sind. Somit kann ein heißes Rauchgas/Brenngas-Gemisch von einem Filtergehäuse bei Erwärmung der dort befindlichen Filterelemente zum anderen Filtergehäuse geführt und dort gefiltert abgeführt werden.

Wenngleich sich bei dieser Ausführungsform die Wärmebilanz gegenüber ersterer Ausführung mit gemeinsamen Filtergehäuse verschlechtert, so kann durch diese Ausführung mit zwei durch eine Rauchgasführung verbundenen Filterelementen für den unwahrscheinlichen Fall eines Bruchs eines Filterelements durch entsprechende Klappenstellungen in den Rauchgaszuführungen ein Austausch einfacher während des laufenden Betriebs bewirkt werden.

Die Anordnung der Filterelemente in einem Filtergehäuse zur Realisierung einer möglichst großen Filtrationsfläche wird begünstigt, wenn jede Filtereinrichtung zumindest zwei Filterelemente aufweist, die je Filtereinrichtung in eine gemeinsame Gasleitung zur Ableitung des gereinigten Rauchgas/Brenngas-Gemischs münden.

Weiterhin ist es besonders vorteilhaft, wenn in/an der Gasleitung in Strömungsrichtung des gereinigten Rauchgas/Brenngas-Gemischs betrachtet oberhalb des Absperrventils, d. h. zwischen dem Filtergehäuse und dem Absperrventil, mindestens ein Einlassventil angeordnet ist. Hierbei kann über das Einlassventil dem Filterelement ein Sauerstoffgemisch zugeführt werden. Um die Zufuhr des Sauerstoffgemischs über das Einlassventil entgegen der regulären Strömungsrichtung zu ermöglichen, ist es erforderlich, dass das zugehörige Absperrventil geschlossen ist und somit das Sauerstoffgemisch nicht in unzulässiger Weise in Strömungsrichtung aus der Vorrichtung abgeführt wird.

Durch diese neugeschaffene Ausführungsform wird eine neuartige Reinigungsweise zur Reinigung der Filterelemente ermöglicht. Diese können somit unter Einsatz eines Sauerstoffgemischs gereinigt werden, ohne dass es der üblicherweise erforderlichen Versorgung mit Stickstoff und der Druckbläser bedarf.

In vorteilhafter Weise sind die Filterelemente stehend angeordnet, wobei die Gasleitung zur Ableitung des gereinigten Brenngases an der Unterseite der Filterelemente mittelbar oder unmittelbar angeschlossen ist. Durch die stehende Anordnung wird ein ansonsten nicht auszuschließender Abriss des Filterelements, insbesondere bei größeren Anhaftungsvolumen und den zusätzlichen Belastungen durch den Reinigungsvorgang, verhindert. Nunmehr lastet das Gewicht der Filterelemente sowie der Anhaftungen stehend auf den Filterelementen, wobei zu berücksichtigen ist, dass diese in aller Regel aus einem keramischen Material bestehen, welches wiederum Druckbelastungen deutlich besser als Zugbelastungen widerstehen kann.

Zur Sicherung der Filterelemente, insbesondere bei Transport und Aufstellung, sowie zur Verhinderung von dynamischen Bewegungen durch beispielsweise Druckstöße im Rauchgas/Brenngas-Gemisch ist es weiterhin vorteilhaft, wenn die Filterelemente jeweils in einer käfigartigen Aufnahme im Filtergehäuse gehaltert sind. Die gitterartige Aufnahme verhindert insbesondere bei liegendem Transport und bei Aufrichtung einen Abbruch der Filterelemente durch Biegebelastungen. Ebenso kann für Wartungszwecke eine Entnahme der Filterelemente mit deutlich geringerem Schadensrisiko erfolgen.

Weiterhin ist es vorteilhaft, wenn mindestens vier, vorzugsweise sechs bis acht Filterelemente vorgesehen sind, die sich auf zwei verschiedene Filtereinrichtungen aufteilen. Hierbei bietet sich insbesondere eine kreisförmige Anordnung der Filterelemente an, wobei die Filterelemente mit ungerader Ordnungszahl in eine erste gemeinsame Gasleitung einer ersten Filtereinrichtung münden, und die Filterelemente mit gerader Ordnungszahl in eine zweite gemeinsame Gasleitung einer zweiten Filtergruppe münden. D. h. das erste, dritte und fünfte Filterelement führt zur ersten Gasleitung und das zweite, vierte und sechste Filterelement führt zur zweiten Gasleitung.

Eine vorteilhafte Durchströmung der Filterelemente mit vorteilhafter Verteilung des Volumenstroms auf die von den Filterelementen bereitgestellte Filtrationsfläche wird vorteilhaft dadurch realisiert, dass die Einlassöffnung zur Einleitung des zu reinigenden Rauchgas/Brenngas-Gemischs in das Filtergehäuse oberhalb der Filterelemente angeordnet ist. Somit wird in vorteilhafter Weise auf im Wesentlichen der gesamten Höhe der Filterelemente eine gleichmäßige Einströmung in die Filterelemente bewirkt, so dass eine gleichmäßige Ablagerung von den zurückzuhaltenden Stoffen auf dem Filterelement stattfindet. Somit tritt lediglich ein geringer Druckverlust durch den Einsatz der Filterelemente auf.

Vorteilhaft ist eine Anordnung der Gasleitung zur Ableitung des gereinigten Rauchgas/Brenngas-Gemischs, insbesondere bei stehender Anordnung der Filterelemente, mit einer Herausführung aus dem Filtergehäuse unterhalb der Filterelemente.

Zum Austrag der bei Reinigung der Filterelemente anfallenden Partikel ist es weiterhin vorteilhaft, wenn unterhalb der Filtereinrichtung eine Einrichtung zur Sammlung und/oder zum Abtransport von Filtratpartikeln vorgesehen ist. Somit können die sich im Gehäuse ansammelnden, insbesondere größeren, Partikel vorteilhaft von Zeit zu Zeit aus dem Filtergehäuse entfernt werden.

Die erfindungsgemäße Vorrichtung zur Reinigung eines heißen Rauchgas/Brenngas-Gemischs ergänzt sich um ein neuartiges erfindungsgemäßes Verfahren. Hierbei wird zunächst einmal gattungsgemäß eine Vorrichtung eingesetzt, welche zumindest zwei Filtereinrichtungen aufweist, die jeweils zumindest ein Filterelement mit einer sich am Filterelement anschließenden Gasleitung aufweisen. Hierbei ist in der Gasleitung zur Ableitung des gereinigten Rauchgas/Brenngas-Gemischs ein in der Gasleitung angeordnetes Absperrventil vorhanden, wobei die Filtereinrichtungen jeweils durch entsprechende Stellung der Absperrventile wechselnd betrieben werden können.

Erforderlich zur Realisierung des erfindungsgemäßen Verfahrens ist hierbei eine Vorrichtung, welche die Filterelemente der zumindest zwei Filtereinrichtungen in einem gemeinsamen Filtergehäuse vereinigt. Alternativ ist es in einer gegenüber dem bekannten Stand der Technik verbesserten, jedoch gegenüber erster Ausführung verschlechterten Ausführung möglich, zwei Filtergehäuse einzusetzen, die mittels einer Rauchgasführung miteinander verbunden sind. Bezüglich der gemeinsamen Anordnung der Filterelemente in einem Filtergehäuse sowie der dazu möglichen Alternative gilt oben Gesagtes.

Weiterhin bedarf es zur Durchführung des erfindungsgemäßen Verfahrens der Möglichkeit zur Zuführung eines Sauerstoffgemischs in die Filterelemente entgegen der Filtrationsrichtung, d. h. entgegen der Strömungsrichtung des Rauchgas/Brenngas-Gemischs bei ansonsten regulärem Betrieb. Dies wird ermöglicht durch Anordnung eines entsprechenden Einlassventils zur Regelung der Zufuhr des Sauerstoffgemischs in die Gasleitung zwischen Filtergehäuse und Absperrventil.

Im regulären Betrieb wird zur Reinigung des mit Partikeln belasteten Rauchgas/Brenngas-Gemischs dieses über eine Einlassöffnung in das gemeinsame Filtergehäuse eingeströmt. Zur Durchströmung der Vorrichtung bedarf es der Öffnung des Absperrventils einer der zumindest zwei Filtereinrichtungen, so dass das eingeleitete Rauchgas/BrenngasGemisch das Filterelement der einen Filtereinrichtung durchströmen kann, um sodann gefiltert durch die zugehörige Gasleitung der einen Filtereinrichtung abgeleitet werden zu können. In diesem Zustand ist, wie im Stand der Technik üblich, das Absperrventil der anderen Filtereinrichtung geschlossen, so dass folglich keine Durchströmung des anderen Filterelements vom Rauchgas/Brenngas-Gemisch stattfindet.

Während der Reinigung des Rauchgas/Brenngas-Gemischs über eine erste Filtereinrichtung ist es nunmehr möglich, die Reinigung des Filterelements der zweiten Filtereinrichtung vorzunehmen. Hierzu wird bei geschlossenem Absperrventil der zweiten Filtereinrichtung deren Einlassventil geöffnet. Infolge dessen strömt ein Sauerstoffgemisch durch die zweite Gasleitung entgegen der üblichen Strömungsrichtung des Rauchgas/Brenngas-Gemischs in das zweite Filterelement hinein. Nachfolgend durchströmt das Sauerstoffgemisch das Filterelement der zweiten Filtereinrichtung und wird als Rauchgas im gemeinsamen Filtergehäuse über das Rauchgas/Brenngas-Gemisch über die erste Filtereinrichtung abgeführt.

Sobald der Reinigungsprozess hinreichend abgeschlossen ist, wird das Einlassventil der zweiten Filtereinrichtung geschlossen und die Durchströmung der zweiten Filtereinrichtung beendet. Nunmehr steht die zweite Filtereinrichtung in Bereitschaftsstellung zur Verfügung zur späteren Reinigung der ersten Filtereinrichtung.

Sobald es der Reinigung des Filterelements der ersten Filtereinrichtung bedarf, wird das Absperrventil der zweiten Filtereinrichtung geöffnet und nachfolgend das Absperrventil der ersten Filtereinrichtung geschlossen. Sodann kann - wie zuvor beschrieben - nunmehr eine Reinigung der ersten Filtereinrichtung stattfinden, wobei hierzu analog das Einlassventil der ersten Filtereinrichtung geöffnet wird, so dass das Sauerstoffgemisch nunmehr die Gasleitung und das Filterelement der ersten Filtereinrichtung entgegen der üblichen Strömungsrichtung des Rauchgas/Brenngas-Gemischs durchströmen kann, um die Reinigung der ersten Filtereinrichtung zu bewirken.

Somit ist ein wechselnder Betrieb der beiden Filtereinrichtungen gewährleistet mit der Möglichkeit der Reinigung der jeweils nicht in Betrieb befindlichen Filtereinrichtung während des laufenden Betriebs der anderen Filtereinrichtung.

Maßgeblich für eine besonders vorteilhafte Reinigung der Filterelemente ist es hierbei, wenn die Temperatur im Innenraum des Filtergehäuses und der Sauerstoffgehalt des Sauerstoffgemischs derart gewählt sind, dass zumindest teilweise eine Verbrennung von an den Filterelementen anhaftenden, aus dem Rauchgas/Brenngas-Gemisch gefilterten Kohlenstoffpartikeln erfolgt. Die Verbrennung bezieht sich hierbei auf den Reinigungsprozess des jeweiligen Filterelements, d. h. es findet eine Verbrennung an demjenigen Filterelement statt, welches sich in dem Reinigungsprozess mit Durchströmung mit dem Sauerstoffgemisch befindet.

Hierbei ist es besonders vorteilhaft, wenn das beim Verbrennen der Kohlenstoffpartikel durch die Reinigung des Filterelements einer Filtereinrichtung entstehende Abgas durch die jeweils andere Filtereinrichtung, d. h. mit Durchströmen dessen Filterelements, zusammen mit dem gefilterten Rauchgas/Brenngas-Gemisch abgeleitet wird.

Im Gegensatz zum üblichen Verfahren, bei dem es erforderlich ist, das bei der Reinigung entstehende Staubgemisch einer weiteren Reinigungsvorrichtung zuzuführen, wird in besonders vorteilhafter Weise zunächst eine Verbrennung von anhaftenden Partikeln durchgeführt, so dass sich die Anzahl und Größe von zurückzuhaltenden Partikeln erheblich reduziert, wobei zudem zur Filterung der durch die Reinigung entstehenden Abgase das bereits vorhandene Filterelement der jeweils anderen Filtereinrichtung bei gemeinsamer Anordnung in einem Gehäuse genutzt wird.

Dies reduziert zum einen erheblich den konstruktiven Aufwand zur Realisierung entsprechender Vorrichtungen mit wechselnd betreibbaren Filtereinrichtungen, zum anderen erfolgt die Reinigung der Filterelemente selbst effektiver und mit weniger Reststoffen.

Sofern die alternative Vorrichtung mit zwei Filtergehäusen verwendet wird, so ist das erfindungsgemäße Verfahren weitestgehend übereinstimmend durchzuführen. Im regulären Betrieb der Vorrichtung zur Reinigung des Rauchgas/Brenngas-Gemischs wird das Rauchgas/Brenngas-Gemisch zumindest anteilig in das zweite Filtergehäuse eingeleitet, dessen zweite Filtereinrichtung sich in der Bereitschaftsstellung befindet, während die Filterung im ersten Filtergehäuse durch deren erste Filtereinrichtung erfolgt. Hierbei erwärmt das im zweiten Filtergehäuse eingeleitete Rauchgas/Brenngas-Gemisch die Filterelemente der zweiten Filtereinrichtung, wobei das Rauchgas/Brenngas-Gemisch durch die die Filtergehäuse verbindende Rauchgasführung zum ersten Filtergehäuse zur dortigen Filterung weitergeleitet wird. Hierbei ist das zweite Absperrventil geschlossen und das erste Absperrventil geöffnet.

Zur Reinigung des Filterelements der zweiten Filtereinrichtung wird das Einlassventil der zweiten Filtereinrichtung geöffnet, so dass übereinstimmend mit vorheriger Ausführung ein Sauerstoffgemisch entgegen der üblichen Strömungsrichtung die Filterelemente durchströmen kann. Für die Dauer der Reinigung kann hierbei sowohl vorgesehen sein, dass das Rauchgas/Brenngas-Gemisch ausschließlich dem ersten Filtergehäuse zugeführt wird als auch dem zweiten Filtergehäuse als auch anteilig auf beide Filtergehäuse verteilt wird. Grundsätzlich findet übereinstimmend mit vorherigem Verfahren eine Verbrennung von am zweiten Filterelement anhaftenden Kohlenstoffpartikeln einhergehend mit einer Reinigung der zweiten Filtereinrichtung statt, wobei das entstehende Rauchgas zusammen mit dem Rauchgas/Brenngas-Gemisch über die erste Filtereinrichtung abgeführt wird.

Eine weitere Vereinfachung wird erzielt, wenn als Sauerstoffgemisch im Wesentlichen Luft verwendet wird. Somit bedarf es keiner zusätzlichen Anlagentechnik zur Zuführung des Sauerstoffgemischs zur Reinigung der Filterelemente.

Zur effektiven Reinigung der Filterelemente durch Verbrennung der an den Filterelementen anhaftenden Partikel ist es weiterhin vorteilhaft, wenn die Temperatur im Innenraum des Filtergehäuses, d. h. die reguläre Betriebstemperatur der Filterelemente, zwischen 300 °C und 700 °C liegt.

Zur Sicherstellung der Strömungsrichtung des eingeleiteten Sauerstoffgemischs zur Reinigung der Filterelemente mit Abbrand der auf den Filterelementen anhaftenden Kohlenstoffpartikel ist es weiterhin vorteilhaft, wenn in der Zufuhr des Sauerstoffgemischs relativ zum im Filtergehäuse vorherrschenden Druck ein geringer Überdruck vorliegt. Somit wird sichergestellt, dass keine Rückströmung des Sauerstoffgemischs mit möglicherweise verbranntem Abgas erfolgt.

Weiterhin ist es vorteilhaft, wenn an der Gasleitung bei jeweils geöffnetem Absperrventil im Verhältnis zum im Filtergehäuse vorliegenden Druck ein zumindest geringer Unterdruck anliegt. Somit wird sichergestellt, dass das eingeleitete Rauchgas/Brenngas-Gemisch zielgerichtet und gleichmäßig verteilt durch das Filterelement der jeweils in Betrieb befindlichen Filtereinrichtung geleitet wird.

In der nachfolgenden Figur ist schematisch ein Funktionsprinzip für eine erfindungsgemäße Vorrichtung skizziert.

Es zeigt:

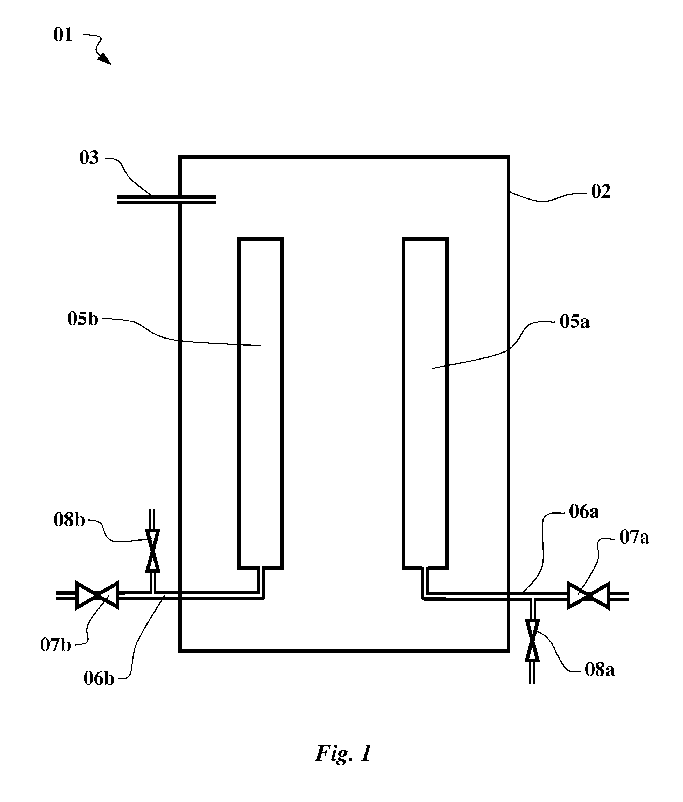

- **Fig. 1**: eine Prinzipskizze einer Vorrichtung mit zwei Filtereinrichtungen.

In der Fig. 1 wird lediglich als Prinzipskizze eine erfindungsgemäße Vorrichtung 01 skizziert, welche zunächst einmal das Filtergehäuse 02 mit der am oberen Ende des Filtergehäuses 02 angeordneten Einlassöffnung 03 zur Einleitung des zur reinigenden Rauchgas/Brenngas-Gemischs aufweist. Im vorliegenden Fall umfasst die Vorrichtung 01 zwei Filtereinrichtungen, welche wiederum jeweils ein Filterelement 05a bzw. 05b mit sich daran an der Unterseite anschließender Gasleitung 06a bzw. 06b sowie ein in der Gasleitung 06 angeordnetes Absperrventil 07a bzw. 07b umfassen. Somit wird ein wechselnder Betrieb der beiden Filtereinrichtungen durch entsprechende Schaltung der Absperrventile 07a, 07b ermöglicht.

Eine besonders einfache und zudem besonders effektive Reinigung der Filterelemente 05 wird dadurch ermöglicht, dass in der Gasleitung 06 jeweils ein Einlassventil 08a bzw. 08b zur Zuführung eines Sauerstoffgemischs angeordnet wird.

Im regulären Betrieb der Vorrichtung 01 ist jeweils ein Absperrventil 07, beispielsweise das der zweiten Filtereinrichtung 07b, geschlossen. In diesem Fall führt eine Einströmung von heißem Rauchgas/BrenngasGemisch durch die Einlassöffnung 03 in das Filtergehäuse 02 zu einer Durchströmung des Filterelements 05 der jeweils anderen Filtergruppe, d. h. im Beispielsfall durch das Filterelement 05a. Das gereinigte Rauchgas/Brenngas-Gemisch wird durch die an der Unterseite des Filterelements 05 angeschlossene Gasleitung 06 über deren geöffnetes Absperrventil 07 abgeleitet.

Soll nunmehr eine Reinigung der ersten Filtereinrichtung erfolgen, so wird zunächst das Absperrventil 07b der zweiten Filtergruppe geöffnet, so dass eine Gasströmung des heißen Rauchgas/Brenngas-Gemischs ebenso durch das Filterelement 05b der zweiten Filtereinrichtung mit Ableitung über deren Gasleitung 06b über das nunmehr geöffnete Absperrventil 07b erfolgt. Sodann kann ohne Unterbrechung des Reinigungsprozesses das Absperrventil 07a der ersten Filtereinrichtung geschlossen werden, so dass im Folgenden die Filtration über die zweite Filtereinrichtung stattfindet.

Zur Reinigung der ersten Filtereinrichtung wird das Einlassventil 08a geöffnet, so dass ein Sauerstoffgemisch durch die Gasleitung 06a entgegen der üblichen Richtung des heißen Rauchgas/Brenngas-Gemischs in das Filterelement 05a einströmen kann. Aufgrund der vorherrschenden heißen Temperaturen im Filtergehäuse 02 und der sich bei Filtration anhaftenden Kohlenstoffpartikel am Filterelement 05 führt die Einleitung des Sauerstoffgemischs unmittelbar zu einer Verbrennung der Kohlenstoffpartikel an der Oberfläche des Filterelements 05a. Die bei der Verbrennung entstehenden Rauchgase, Abgase und sonstigen Partikel werden erfindungsgemäß im gemeinsamen Gehäuse 02 zusammen mit der parallel stattfindenden Einströmung des heißen Rauchgas/Brenngas-Gemischs durch das Filterelement 05b der zweiten Filtereinrichtung abgeleitet.

Bei erster Betrachtung kommt man zur fälschlichen Annahme, dass durch dieses Verfahren zur Reinigung der Filterelemente lediglich die an den Filterelementen filtrierte Menge zwischen den beiden Filterelementen hin und her transportiert wird. Jedoch hat sich herausgestellt, dass sich durch die Verbrennung der Anteil der zurückzuhaltenden Partikel erheblich reduziert. Dies beruht zum einen auf der Verbrennung der Kohlenstoffpartikel zu Rauchgas und zum anderen auf dem beim Reinigungsprozess stattfindenden Zerbröseln und der Zerkleinerung von sonstigen Partikeln, welche in hinreichend kleiner Form das Filterelement passieren können, ohne schädlich für nachfolgende Anlagenumfänge zu sein.

Im Ergebnis führt dies ebenso dazu, dass entgegen der üblichen Prozedur ein Austrag von verbleibenden Filtrationspartikeln aus dem Filtergehäuse 02 bei der erfindungsgemäßen Vorrichtung 01 wesentlich seltener mit geringerem Volumen erforderlich ist.

## Patentansprüche

1. Vorrichtung (01) zur Reinigung eines heißen Rauchgas/Brenngas-Gemischs durch Filterung des in ein Filtergehäuse (02) eingeleiteten Rauchgas/Brenngas-Gemischs, mit zumindest zwei Filtereinrichtungen, die jeweils zumindest ein Filterelement (05a, 05b), eine sich am Filterelement (05) anschließende Gasleitung (06a, 06b) zur Ableitung des gereinigten Brenngases und ein in der Gasleitung (06) angeordnetes Absperrventil (07a, 07b) aufweisen,
**dadurch gekennzeichnet,**
**dass** die Filtereinrichtungen in einem gemeinsamen Filtergehäuse (02) angeordnet sind.

2. Vorrichtung (01) nach Anspruch 1,
**dadurch gekennzeichnet,**
**dass** zumindest eine der Filtereinrichtungen mindestens zwei Filterelemente (05) aufweist, die in eine gemeinsame Gasleitung (06) zur Ableitung des gereinigten Brenngases münden.

3. Vorrichtung (01) nach Anspruch 1 oder 2,
**dadurch gekennzeichnet,**
**dass** in der Gasleitung (06) in Strömungsrichtung des gereinigten Brenngases oberhalb des Absperrventils (07) mindestens ein Einlassventil (08) angeordnet ist, über das dem Filterelement (05) ein Sauerstoffgemisch, insbesondere Luft, zugeführt werden kann.

4. Vorrichtung (01) nach einem der Ansprüche 1 bis 3,
**dadurch gekennzeichnet,**
**dass** die Filterelemente (05) stehend angeordnet sind und die Gasleitung (06) zur Ableitung des gereinigten Brenngases an der Unterseite der Filterelemente (05) mittelbar oder unmittelbar angeschlossen ist.

5. Vorrichtung (01) nach einem der Ansprüche 1 bis 4,
**dadurch gekennzeichnet,**
**dass** mindestens vier, vorzugsweise sechs bis acht Filterelemente (05) vorgesehen sind, die im Wesentlichen kreisförmig angeordnet sind, wobei die Filterelemente (05) mit gerader Ordnungszahl in eine erste und die Filterelemente (05) mit ungerader Ordnungszahl in eine zweite gemeinsame Gasleitung münden.

6. Vorrichtung (01) nach einem der Ansprüche 1 bis 5,
**dadurch gekennzeichnet,**
**dass** die Filterelemente (05) jeweils in einer käfigartigen Aufnahme im Filtergehäuse (02) gehaltert sind.

7. Vorrichtung (01) nach einem der Ansprüche 1 bis 6,
**dadurch gekennzeichnet,**
**dass** die Einlassöffnung (03) zur Einleitung des zu reinigenden Rauchgas/Brenngas-Gemischs in das Filtergehäuse (02) oberhalb der Filterelemente (05) angeordnet ist.

8. Vorrichtung (01) nach einem der Ansprüche 1 bis 7,
**dadurch gekennzeichnet,**
**dass** Gasleitungen (06) zur Ableitung des gereinigten Brenngases unterhalb der Filterelemente (05) aus dem Filtergehäuse (02) geführt sind.

9. Vorrichtung (01) nach einem der Ansprüche 1 bis 8,
**dadurch gekennzeichnet,**
**dass** unterhalb der Filtervorrichtungen eine Einrichtung zur Sammlung und/oder zum Abtransport von Filtratpartikeln vorgesehen ist.

10. Verfahren zur Reinigung eines Rauchgas/Brenngas-Gemischs, mit zumindest zwei in einem gemeinsamen Filtergehäuse (02) angeordneten Filtereinrichtungen, die jeweils zumindest ein Filterelement (05a, 05b), eine sich am Filterelement (05) anschließende Gasleitung (06a, 06b) zur Ableitung des gereinigten Brenngases, ein in der Gasleitung (06) angeordnetes Absperrventil (07a, 07b) und ein in Strömungsrichtung des gereinigten Brenngases oberhalb des Absperrventils (07) angeordnetes Einlassventil (08a, 08b) aufweisen, wobei die Filtergruppen wechselnd zur Filterung des Rauchbrenngasgemischs verwendet werden, mit folgenden Verfahrensschritten:
- Einleitung des zu reinigenden Rauchgas/Brenngas-Gemischs in das Filtergehäuse (02);
- Durchströmung der ersten Filtereinrichtung und Ableitung des gereinigten Brenngases durch das geöffnete Absperrventil (07a) der Gasleitung (06a) der ersten Filtereinrichtung;
- Einleitung eines Sauerstoffgemisches bei geschlossenem Absperrventil (07b) durch das in der zweiten Gasleitung (06b) angeordnete Einlassventil (08b) in und durch die zweite Filtereinrichtung entgegen der Strömungsrichtung des gereinigten Brenngases bzw. des zu reinigenden Rauchgas/Brenngas-Gemischs;
- Schließen des Absperrventils (07a) und Öffnen des Einlassventils (08a) der Gasleitung der ersten Filtereinrichtung und Schließen des Einlassventils (08b) und Öffnen des Absperrventils (07b) der Gasleitung (06b) der zweiten Filtereinrichtung,
wobei die Temperatur im Innenraum des Filtergehäuses (02) und der Sauerstoffgehalt des Sauerstoffgemischs so gewählt sind, dass eine zumindest teilweise Verbrennung von an den Filterelementen (05) anhaftenden, aus dem Rauchgas/Brenngas-Gemisch gefilterten Kohlenstoffpartikeln erfolgt.

11. Verfahren nach Anspruch 10,
**dadurch gekennzeichnet,**
**dass** das beim Verbrennen der Kohlenstoffpartikel einer Filtereinrichtung entstehende Abgas durch die jeweils andere Filtereinrichtung zusammen mit dem gereinigten Brenngas abgeleitet wird.

12. Verfahren nach Anspruch 10 oder 11,
**dadurch gekennzeichnet,**
**dass** das Sauerstoffgemisch im Wesentlichen aus Luft besteht.

13. Verfahren nach einem der Ansprüche 10 bis 12,
**dadurch gekennzeichnet,**
**dass** die Temperatur im Innenraum des Filtergehäuses (02) zwischen 300 °C und 700 °C beträgt.

14. Verfahren nach einem der Ansprüche 10 bis 13,
**dadurch gekennzeichnet,**
**dass** die Zufuhr des Sauerstoffgemischs unter zumindest geringfügigem Überdruck erfolgt.

15. Verfahren nach einem der Ansprüche 10 bis 14,
**dadurch gekennzeichnet,**
**dass** an der Gasleitung (06) bei jeweils geöffnetem Absperrventil (07) ein zumindest geringer Unterdruck anliegt.
